# EUROPÄISCHE PATENTANMELDUNG

(11) **EP 1 126 308 A1**
(43) Veröffentlichungstag der Anmeldung: **22.08.2001**
(21) Anmeldenummer: 01890033.2
(22) Anmeldetag: 12.02.2001
(51) Int. Cl.: G02C 5/22

(54) **Scharniergelenk zwischen einem Bügel und einem Bügelbacken einer Brille**

(30) Priorität: 14.02.2000 AT 2182000
(71) Anmelder: Simon Redtenbacher seel. Ww & Söhne GmbH & Co. KG, 4644 Scharnstein (AT)
(72) Erfinder: Buchegger, Harald, 4817 St. Konrad 78 (AT)
(74) Vertreter: Hübscher, Helmut, Dipl.-Ing.

(57) **Zusammenfassung**

Ein Scharniergelenk zwischen einem Bügel (4) und einem Bügelbacken einer Brille besteht aus einem Scharnierzapfen (1) mit einer ein Ende des Bügels (4) aufnehmenden Halterungsöffnung, die als Durchgangsöffnung (5) mit einer endseitigen Erweiterung (8) für einen verbreiterten Ansatz (7) am Ende des von seinem freien Ende her durch die Durchgangsöffnung (5) einführbaren Bügels (4) ausgebildet ist, und aus einem den Scharnierzapfen (1) aufnehmenden Lagergehäuse (2), das einen sich über den Schwenkwinkel des Scharniergelenkes erstreckenden Umfangsschlitz (6) für den Durchtritt des in den Scharnierzapfen (1) eingesetzten Bügels (4) bildet. Um vorteilhafte Konstruktionsbedingungen zu schaffen, wird vorgeschlagen, daß das Lagergehäuse (2) eine, einem Ende des Umfangsschlitzes (6) diametral gegenüberliegende Einführöffnung (10) für den Bügel (4) aufweist, der von seinem freien Ende her durch die Einführöffnung (10) in die Durchgangsöffnung (5) des in das Lagergehäuse (2) eingesetzten Scharnierzapfens (1) einführbar ist.

## Beschreibung

Die Erfindung bezieht sich auf ein Scharniergelenk zwischen einem Bügel und einem Bügelbacken einer Brille, bestehend aus einem Scharnierzapfen mit einer ein Ende des Bügels aufnehmenden Halterungsöffnung, die als Durchgangsöffnung mit einer endseitigen Erweiterung für einen verbreiterten Ansatz am Ende des von seinem freien Ende her durch die Durchgangsöffnung einführbaren Bügels ausgebildet ist, und aus einem den Scharnierzapfen aufnehmenden Lagergehäuse, das einen sich über den Schwenkwinkel des Scharniergelenkes erstreckenden Umfangsschlitz für den Durchtritt des in den Scharnierzapfen eingesetzten Bügels bildet.

Zur einfachen Ausbildung schraubenloser Scharniergelenke von Brillen ist es bekannt, am Bügelende einen Scharnierzapfen vorzusehen, der in einem mit dem Bügelbacken verbundenen Lagergehäuse drehbar gehalten wird. Dieses Lagergehäuse besteht aus einer Lagerbuchse mit einem sich über den Schwenkwinkel des Scharniergelenkes erstreckenden Umfangsschlitz für den Bügeldurchtritt. Wird der Scharnierzapfen außerhalb des Lagergehäuses mit dem Bügel verbunden, so ist in der das Lagergehäuse bildenden Lagerbuchse zusätzlich ein axialer Einführschlitz vorzusehen, der von einer offenen Stirnseite der Lagerbuchse ausgeht und in einem Endbereich des Umfangsschlitzes mündet, so daß der Scharnierzapfen mit dem Bügel in axialer Richtung in das Lagergehäuse eingesetzt werden kann, bis der Bügel durch den Einführschlitz in den Bereich des Umfangsschlitzes gelangt. Der Bügel kann dann unter einer Drehung des Scharnierzapfens im Lagergehäuse entlang des Umfangsschlitzes verschwenkt werden. Die Führung des Bügels im Umfangsschlitz des Lagergehäuses bringt eine axiale Festlegung des Scharnierzapfens gegenüber dem Lagergehäuse mit sich, wobei es keiner weiteren Sicherungsmaßnahme bedarf, wenn der Einführschlitz außerhalb des üblichen Schwenkbereiches des Bügels liegt. Trotzdem kann es zu einem unbeabsichtigten Austritt des Scharnierzapfens aus dem Lagergehäuse kommen, sobald der Bügel in den Bereich des Einführschlitzes geschwenkt wird, der ja eine axiale Verlagerung des Scharnierzapfens freigibt. Auf das Vorsehen eines axialen Einführschlitzes kann zwar unter der Voraussetzung verzichtet werden, daß der Bügel mit dem in das Lagergehäuse eingesetzten Scharnierzapfen durch den Umfangsschlitz des Lagergehäuses hindurch verbunden wird, doch können die zu diesem Zweck vorzusehenden Steckverbindungen den Belastungsanforderungen nicht genügen, wenn ein nachträgliches Lösen des Bügels gefordert wird.

Wird bei einem anderen bekannten Scharniergelenk (EP 0 945 751 A1) zur einfacheren Verbindung des Bügels mit dem Schamierzapfen die Halterungsöffnung des Scharnierzapfens als Durchgangsöffnung mit einer endseitigen Erweiterung für einen verbreiterten Ansatz am Ende des von seinem freien Ende her durch die Durchgangsöffnung einführbaren Bügels ausgebildet, so ergeben sich grundsätzlich ähnliche Nachteile, weil zum Einsetzen des Scharnierzapfens in das Lagergehäuse zunächst der Bügel in den Schamierzapfen eingeführt werden muß, bevor der Scharnierzapfen mit dem Bügel in das Gehäuse eingeführt werden kann, was einen zusätzlichen axialen Einführschlitz des Lagergehäuses für den Bügel erfordert.

Der Erfindung liegt somit die Aufgabe zugrunde, ein Scharniergelenk der eingangs geschilderten Art zwischen einem Bügel und einem Bügelbacken einer Brille so auszugestalten, daß eine einfache, lösbare Verbindung des Bügels mit dem Scharnierzapfen durch das Lagergehäuse erreicht wird, und zwar unter einer allen Anforderungen entsprechenden Halterung des Bügels im Scharnierzapfen.

Die Erfindung löst die gestellte Aufgabe dadurch, daß das Lagergehäuse eine einem Ende des Umfangsschlitzes diametral gegenüberliegende Einführöffnung für den Bügel aufweist, der von seinem freien Ende her durch die Einführöffnung in die Durchgangsöffnung des in das Lagergehäuse eingesetzten Scharnierzapfens einführbar ist.

Zufolge dieser Maßnahmen kann der Bügel zwar durch eine Einführöffnung des Lagergehäuses und durch das der Einführöffnung gegenüberliegende Ende des Umfangsschlitzes in die Durchgangsöffnung des in das Lagergehäuse eingesetzten Scharnierzapfens eingeführt, nicht aber aus dem Scharnierzapfen in Richtung des Umfangsschlitzes des Lagergehäuses herausgezogen werden, so daß sich für den Bügel vorteilhafte Halterungsbedingungen ergeben. Da der Umfangsschlitz im Lagergehäuse im Bereich des der Einführöffnung gegenüberliegenden Endes über den üblichen Schwenkbereich des Scharniergelenkes hinaus verlängert ist, besteht keine Gefahr, daß das Scharniergelenk unbeabsichtigt gelöst wird, zumal zum Lösen des Scharniergelenkes nicht nur der Bügel in die hiefür vorgesehene Endlage verschwenkt, sondern auch über seine gesamte Länge aus dem Scharnierzapfen ausgeschoben werden muß. Bedenkt man, daß die der Einführstellung gegenüberliegende Endlage des Bügels innerhalb des Umfangsschlitzes des Lagergehäuses der Strecklage des Bügels vorbehalten ist, so kann für die die Einführstellung bestimmende Endlage des Bügels ein Schwenkwinkel vorgesehen werden, der nur unter einer elastischen Verformung des Bügels bei seinem Einschwenken gegen die Brillenfassung hin erreicht wird, was eine zusätzliche Sicherung gegen ein unbeabsichtigtes Ausschieben des verbreiterten Bügelendes aus der Durchgangsöffnung des Scharnierzapfens mit sich bringt.

Weist der Bügel eine von der Kreisform abweichende Querschnittsform auf, so bedarf es bei einer entsprechenden Negativform des Querschnittes der Durchgangsöffnung im Scharnierzapfen keiner zusätzlichen Maßnahmen, eine Verdrehung des Bügels in der Durchgangsbohrung zu verhindern. Bildet der Bügel einen Kreisquerschnitt, so kann zur drehfesten Halterung des Bügels in der Durchgangsöffnung des Scharnierzapfens der verbreiterte Ansatz des Bügelendes und die zugehörige Erweiterung der Durchgangsöffnung eine von einem Kreisquerschnitt abweichende Querschnittsform aufweisen, wobei ein verbreiterter Ansatz des Bügelendes in Form eines flachgedrückten Endabschnittes des Bügels besonders einfache Konstruktionsverhältnisse schafft.

Um für die Gängigkeit des Scharniergelenkes vorteilhafte Reibungsverhältnisse zwischen dem Scharnierzapfen und dem Lagergehäuse unabhängig von den unvermeidbaren Fertigungstoleranzen insbesondere unter den Bedingungen einer Serienfertigung zu ermöglichen, kann die Mantelfläche des aus Kunststoff gefertigten Scharnierzapfens eine Strukturierung in Form von radial vorstehenden, sich elastisch an die Innenwandung des Lagergehäuses anschmiegenden Erhebungen, vorzugsweise Rippen, aufweisen. Aufgrund dieser Strukturierung der Mantelfläche des Scharnierzapfens können die Toleranzbereiche so gewählt werden, daß ein Anliegen des Scharnierzapfens an der Innenwandung des Lagergehäuses sichergestellt wird, ohne eine unerwünschte Schwergängigkeit des Scharniergelenkes befürchten zu müssen. Die eine Strukturierung der Mantelfläche ergebenden Erhebungen schmiegen sich nämlich bei einer geeigneten Formgebung unter einer elastischen Verformung an die Innenwandung des Lagergehäuses an, ohne eine die Gängigkeit des Scharniergelenkes beeinträchtigende, radiale Pressung in Kauf nehmen zu müssen. Durch die elastische Verformung der Erhebungen der Mantelfläche ergibt sich ein wirksamer Toleranzausgleich, der eine angestrebte Gängigkeit dieser Scharniergelenke auch unter Bedingungen einer Serienfertigung erlaubt. Dies gilt auch für den Einsatz von härteren Kunststoffen, die für eine ausreichende Halterung der metallischen Bügel in den Scharnierzapfen erforderlich werden.

In der Zeichnung ist der Erfindungsgegenstand beispielsweise dargestellt. Es zeigen
- Fig. 1: ein erfindungsgemäßes Scharniergelenk zwischen einem Bügel und einem Bügelbacken einer Brille in einer vereinfachten Seitenansicht,
- Fig. 2: dieses Scharniergelenk in einem Schnitt nach der Linie II-II der Fig. 1 und
- Fig. 3: das Scharniergelenk in einer der Fig. 2 entsprechenden Darstellung, jedoch in einer für das Einführen des Bügels in den Scharnierzapfen bestimmten Endlage.

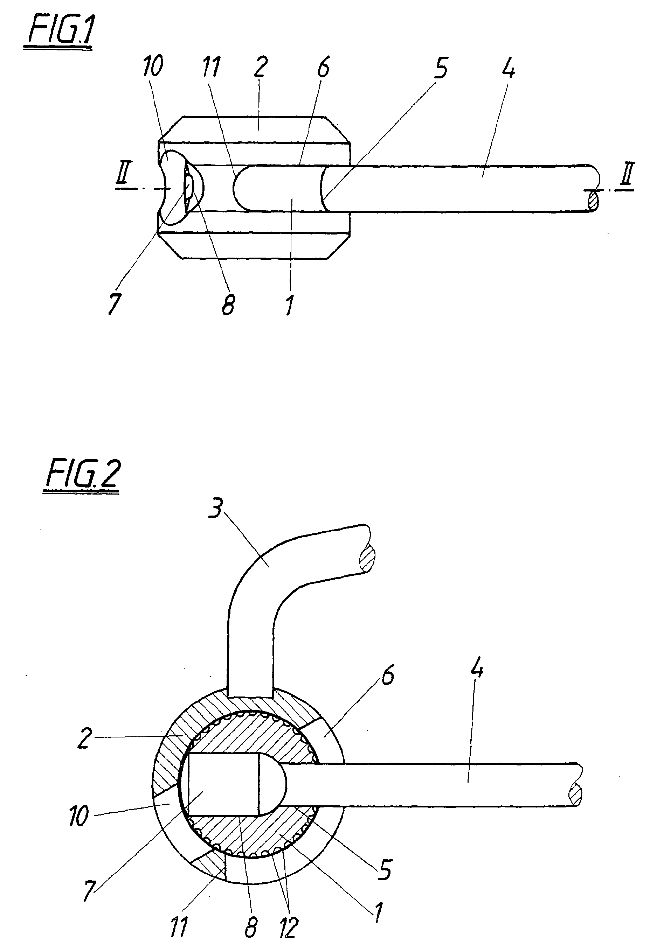

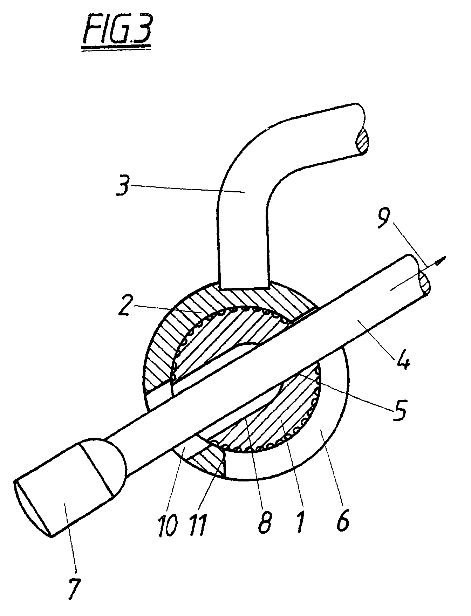

Wie den Fig. 1 bis 3 entnommen werden kann, besteht das Scharniergelenk gemäß dem dargestellten Ausführungsbeispiel aus einem Scharnierzapfen 1 aus Kunststoff und einem zylindrischen, metallischen Lagergehäuse 2, das an einen Verbindungsansatz 3 eines Bügelbackens angelötet ist. Der Bügel 4 ist in eine Durchgangsöffnung 5 des Scharnierzapfens 1 eingesetzt und durchsetzt das Lagergehäuse 2 in einem Umfangsschlitz 6, der den möglichen Schwenkwinkel des Scharniergelenkes durch seine Länge bestimmt. Da das scharnierseitige Bügelende einen flachgedrückten, verbreiterten Ansatz 7 bildet, der in eine entsprechende endseitige Erweiterung 8 der Durchgangsöffnung 5 eingreift, was eine verdrehsichere Halterung des Bügels 4 in der Durchgangsöffnung 5 mit sich bringt, kann der Bügel 4 nur von seinem freien Ende her auf der Seite der Erweiterung 8 in den Scharnierzapfen 1 eingeführt, nicht aber in der Einführrichtung 9 (Fig. 3) aus dem Scharnierzapfen 1 herausgezogen werden. Dieser Umstand ergibt eine einfache, zugfeste Verbindung zwischen dem Bügel 4 und dem Scharnierzapfen 1, doch erfordert das Einführen des Bügels 4 in die Durchgangsöffnung 5 vom freien Bügelende her eine zusätzliche Einführöffnung 10 im Lagergehäuse 2, die einem Ende des Umfangsschlitzes 6 des Lagergehäuses 2 diametral gegenüberliegt. In dieser in der Fig. 3 gezeichneten Endstellung des Scharniergelenkes kann daher der Bügel 4 durch die Einführöffnung 10 im Lagergehäuse 2 hindurch in den Scharnierzapfen 1 eingesetzt werden, wobei der Bügel 4 durch den Scharnierzapfen 1 gezogen wird, bis der verbreiterte Ansatz 7 in der zugehörigen Erweiterung 8 der Durchgangsöffnung 5 anschlägt. In dieser Anschlagstellung des Bügels 4 kann der Scharnierzapfen 1 innerhalb des Lagergehäuses 2 gedreht werden. Der Bügel 4 findet dabei eine Führung im Umfangsschlitz 6, so daß der Scharnierzapfen 1 in axialer Richtung gegenüber dem Lagergehäuse 2 festgelegt wird. Die Drehbewegung des Scharnierzapfens 1 innerhalb des Lagergehäuses 2 wird durch den Umfangsschlitz 6 begrenzt, der einen die Strecklage des Bügels 4 bestimmenden Anschlag 11 für den Bügel 4 bildet. Mit Ausnahme der in der Fig. 3 dargestellten Drehstellung wird der Bügel 4 an einem Ausschieben aus dem Scharnierzapfen 1 durch das Lagergehäuse 2 gehindert, das die Durchgangsöffnung 5 zumindest teilweise abdeckt. Wie der Fig. 3 entnommen werden kann, liegt die die Einführstellung bestimmende Endlage des Scharniergelenkes außerhalb des üblichen Schwenkbereiches, weil der Bügel 4 unter einer elastischen Biegebeanspruchung gegen die Brillenfassung eingeschwenkt werden muß. Zum Lösen des Bügels 4 ist daher das Scharniergelenk unter Überwindung des Biegewiderstandes des Bügels 4 in die Endstellung für das Einführen des Bügels 4 zu verschwenken, um den Bügel 4 in dieser Schwenkstellung entgegen der Einführrichtung 9 aus der Durchgangsöffnung 5 des Scharnierzapfens 1 durch die Einführöffnung 10 des Lagergehäuses 2 hindurch ausschieben zu können.

Wie der Fig. 2 entnommen werden kann, kann der Scharnierzapfen 1 eine strukturierte Mantelfläche in Form von radial vorstehenden Erhebungen 12 aufweisen, die gemäß dem dargestellten Ausführungsbeispiel als axiale Rippen ausgebildet sein können. Durch diese Erhebungen 11 kann eine spielfreie Aufnahme des Scharnierzapfens 1 im Lagergehäuse 2 gewährleistet werden, ohne einen die Scharniergängigkeit beeinträchtigenden Preßsitz befürchten zu müssen. Die Querschnittsform der Erhebungen 11 kann nämlich stets so gestaltet werden, daß sich im Anlagebereich an der Innenwandung des Lagergehäuses 2 eine elastische Verformung einstellt, die eine Schwergängigkeit des Scharniergelenkes unterbindet. Die örtlich beschränkte Abstützung des Scharnierzapfens 1 an der Innenwandung des Lagergehäuses 2 über die Erhebungen 12 bringt somit den für das Einhalten einer angestrebten Gängigkeit des Scharniergelenkes erforderlichen Toleranzausgleich mit sich.

## Patentansprüche

1. Scharniergelenk zwischen einem Bügel und einem Bügelbacken einer Brille, bestehend aus einem Scharnierzapfen mit einer ein Ende des Bügels aufnehmenden Halterungsöffnung, die als Durchgangsöffnung mit einer endseitigen Erweiterung für einen verbreiterten Ansatz am Ende des von seinem freien Ende her durch die Durchgangsöffnung einführbaren Bügels ausgebildet ist, und aus einem den Scharnierzapfen aufnehmenden Lagergehäuse, das einen sich über den Schwenkwinkel des Scharniergelenkes erstreckenden Umfangsschlitz für den Durchtritt des in den Scharnierzapfen eingesetzten Bügels bildet, dadurch gekennzeichnet, daß das Lagergehäuse (2) eine einem Ende des Umfangsschlitzes (6) diametral gegenüberliegende Einführöffnung (10) für den Bügel (4) aufweist, der von seinem freien Ende her durch die Einführöffnung (10) in die Durchgangsöffnung (5) des in das Lagergehäuse (2) eingesetzten Scharnierzapfens (1) einführbar ist.

2. Scharniergelenk nach Anspruch 1, dadurch gekennzeichnet, daß der verbreiterte Ansatz (7) des Bügelendes aus einem flachgedrückten Endabschnitt des Bügels (4) besteht.

3. Scharniergelenk nach Anspruch 1 oder 2, dadurch gekennzeichnet, daß die Mantelfläche des aus Kunststoff gefertigten Scharnierzapfens (1) eine Strukturierung in Form von radial vorstehenden, sich elastisch an die Innenwandung des Lagergehäuses (2) anschmiegenden Erhebungen (12), vorzugsweise Rippen, aufweist.
